# EUROPÄISCHE PATENTSCHRIFT

(11) **EP 1 184 522 B1**
(45) Veröffentlichungstag und Bekanntmachung des Hinweises auf die Patenterteilung: **28.07.2010**
(21) Anmeldenummer: 01810797.9
(22) Anmeldetag: 17.08.2001
(51) Int. Cl.: E04B 1/94, C04B 26/02, F16L 5/04

(54) **Flexible Brandschutzplatte und deren Verwendung zum Brandschutz von Mauer-, Boden- oder Deckendurchbrüchen**
Flexible fireproof panel and its use for fireproofing walls, floor or ceiling openings
Panneau anti-feu flexible pour la protection anti-feu d'ouvertures dans des murs, planchers ou plafonds

(30) Priorität: 30.08.2000 DE 10042580
(43) Veröffentlichungstag der Anmeldung: 06.03.2002
(73) Patentinhaber: HILTI Aktiengesellschaft, 9494 Schaan (LI)
(72) Erfinder: Münzenberger, Herbert, 65191 Wiesbaden (DE)
(74) Vertreter: Wildi, Roland

(56) Entgegenhaltungen:
- EP-A- 0 512 629
- DE-A- 3 629 390
- DE-A- 3 801 456
- DE-A- 4 404 701
- DE-A- 19 806 012
- GB-A- 2 340 125
- US-A- 3 243 388
- US-A- 3 627 706
- US-A- 4 863 519
- CHEMICAL ABSTRACTS, Bd. 95, Nr. 6, 10. August 1981 (1981-08-10), Columbus, Ohio, US; abstract no.: 47990z, IG-TECHNICAL RESEARCH: "flame-resistant, heat-insulating materials" XP000392644 & JP 51 065461 A (IG-TECHNICAL RESEARCH) 7. Juni 1976 (1976-06-07)

## Beschreibung

Gegenstand der vorliegenden Erfindung ist eine flexible Brandschutzplatte mit einer Kunststoffmatrix und anorganischem Füllstoff, sowie deren Verwendung zum Brandschutz von Mauer-, Boden- oder Deckendurchbrüchen, insbesondere von Rohr- und Kabeldurchführungen.

Es ist bekannt, daß Durchbrüche durch Wände, Böden und Decken einander abgrenzender Räume im Brandfall problematisch sind, weil sich das Feuer durch solche Durchbrüche hindurch ausbreiten kann. Da im allgemeinen Mauer- oder Deckendurchführungen, insbesondere Rohr- und Kabeldurchführungen nicht konstruktiv vermieden werden können, ist es üblich, zum Brandschutz derartige Durchbrüche und die Ringspalte zwischen den hindurchgeführten Rohren und Kabeln, etwaigen Flanschen und dem Wand-, Boden- und Deckenmaterial abzudichten. Hierzu werden üblicherweise sogenannte Weichschotts beziehungsweise Plattenschotts aus nichtbrennbarem Material eingesetzt.

Eine Möglichkeit zur Erzeugung eines solchen Brandschotts besteht in der Verwendung beschichteter Mineralfaserplatten, mit denen die Bauteilöffnungen verschlossen werden, wonach sämtliche Spalten, Fugen, Zwickel und auch die Oberfläche der Brandschutzplatten mit einer ablativen oder intumeszierenden Beschichtung rauchgasdicht versiegelt werden. Solche Mineralfaserplatten sind aber nachteilig, weil sie sehr arbeitsintensiv und unangenehm zu verarbeiten sind und nur eine geringe mechanische Stabilität im Brandfall ergeben. Insbesondere überstehen solche Mineralfaserplatten im Brandfall den Löschwassertest (Hose Stream Test) nicht, das bedeutet, daß beim Auftreffen des Wasserstrahls eines Feuerwehrmanns im Brandfall die Rückstände einer solchen Mineralfaserplatte sehr leicht zerstört werden.

Eine weitere Möglichkeit, die üblicherweise in den Vereinigten Staaten von Amerika angewandt wird, ist der Einsatz von Sandwich-Platten, das heißt mehrschichtigen Platten aus einer Lage Stahlblech, einer 1 cm dicken Lage aus einer gummielastischen, intumeszierenden Masse mit einer Armierung aus Maschendraht und einer Abdeckung aus Aluminiumfolie, welche angepaßt und über der Bauteilöffnung montiert wird. Im Anschluß daran werden sämtliche Fugen, Spalten, Zwickel und dergleichen mit einer intumeszierenden Masse verschlossen. Auch diese Sandwich-Platten sind sehr zeit- und kostenaufwendig in der Verarbeitung, da das erforderliche Zuschneiden angesichts der Stahlblechlage sich sehr schwierig gestaltet. Im übrigen sind mit solchen Sandwichplatten die Zulassung gemäß DIN 4102, Teil 9, bei denen nicht nur der Feuerdurchtritt, sondern vor allem eine Temperaturüberschreitung verhindert werden soll, nicht oder nur sehr aufwendig zu erreichen.

Aus der US-A-3,243,388 sind Kunststoff-Baumaterialien in Form eines Kunststoffschaums mit geschlossenen Poren bekannt, welcher als Füllstoff expandierte Tonteilchen enthält, beispielsweise Schaumglas, Bimsstein, expandierter Vermiculit oder expandierter Perlit.

Aus Chemical Abstracts Bd. 95, Nr. 6 (1981), 47990z, sind flammbeständige, hitzeisolierende Materialien bekannt, die poröse anorganische Teilchen als Füllstoff in einem synthetischen Harz enthalten, bei dem es sich um ein Polyurethanharz handelt, welches zu einer flammbeständigen, hitzeisolierenden Platte ausgehärtet wird.

Gegenstand der GB-A-2 340 125 A ist ein Material in Form einer im wesentlichen homogenen Mischung aus Teilchen und einem als Matrix dienenden organischen Material sowie ein Bindemittel für die Teilchen, wobei die Teilchen einen Durchmesser von weniger als 5 mm aufweisen. Das Matrixmaterial kann ein organisches oder anorganisches Bindemittel sein, während dem die in der Matrix vorliegenden Teilchen vorzugsweise Teilchen aus Vermiculit oder Perlit sind und als Matrixmaterial Bitumen bevorzugt ist.

Gegenstand der US-A-4,863,519 ist ein Verfahren zur Herstellung von Blöcken, Bauelementen, etc., die gesägt und genagelt werden können und welche grobkörnige anorganische Füllstoffe umfassen, die in ein schnell abbindendes Bindemittel eingebettet sind, wobei sich noch freie äußere Hohlräume ergeben, die mit einem Kunststoffschaum ausgefüllt sind. Als schnell härtendes Bindemittel ist ein anorganisches Bindemittel vorgesehen, wie Zement, Gips oder Mischungen davon, während als expandierbares Kunststoffmaterial zur Erzeugung des Kunststoffschaums auch Polyurethan eingesetzt werden kann.

Die US-A-3,627,706 beschreibt ein mineralische Füllstoffe enthaltendes Schaumprodukt auf der Grundlage eines Polyurethanschaums und eines körnigen Füllstoffs.

Gegenstand der DE 44 04 701 A1 sind Verbundschaumsstoffe, welche Siliciumdioxid-Xerogel-Teilchen in einem Polyurethanschaum umfassen und die zum Zwecke der Wärmedämmung verwendet werden können.

Aus den Druckschriften EP-A-0 512 629 A2 und DE 38 01 456 A1 ist es bereits bekannt, dass man Säurebildner, wie Ammoniumpolyphosphat und Kohlenstoff liefernde Verbindungen, wie Pentaerythritol als Flammschutzmittel einsetzen kann.

Schließlich offenbart die DE 36 29 390 A1 die Verwendung von Ruß und/oder Aluminiumpulver als Füllstoff.

Die Aufgabe der vorliegenden Erfindung besteht somit darin, eine Brandschutzplatte anzugeben, die sehr einfach hergestellt und angewandt werden kann, eine hohe mechanische Festigkeit nicht nur bei der Montage sondern auch im Brandfall zeigt und die erforderlichen Anforderungen des Brandschutzes gemäß der oben angesprochenen DIN-Norm ohne weiteres zu erfüllen ermöglicht.

Diese Aufgabe wird gelöst durch eine flexible Brandschutzplatte, die in einer Kunststoffmatrix aus einem weichelastischen organischen Bindemittel einen grobkörnigen anorganischen Füllstoff eingebettet enthält. Gegenstand der Erfindung ist daher die flexible Brandschutzplatte nach Anspruch 1.

Die Unteransprüche betreffen bevorzugte Ausführungsformen dieser Brandschutzplatte sowie deren Verwendung zum Brandschutz von Mauer-, Boden- oder Deckendurchbrüchen, insbesondere von Rohr- und Kabeldurchführungen.

Die erfindungsgemäße Brandschutzplatte mit einer Kunststoffmatrix und anorganischem Füllstoff, mit einer Platte aus einem weichelastischen organischen Bindemittel, in welches ein grobkörniger anorganischer Füllstoff eingebettet ist, ist dadurch gekennzeichnet, dass das weichelastische organische Bindemittel 10 bis 60 Gew.-% eines Additivs zur Erhöhung der Formbeständigkeit der im Brandfall gebildeten Kruste enthält, wobei das Additiv eine Additivmischung mit einem Gehalt an mindestens einem Säurebildner, mindestens einer Kohlenstoff liefernden Verbindung und mindestens einem telichenförmigen Metall umfaßt.

Vorzugsweise enthält die Brandschutzplatte als weichelastisches Bindemittel eine vulkanisierte Kautschukmasse, ein Dispersionsacrylat, ein Polyvinylacetat und insbesondere ein weichelastisches Polyurethanpolymer, vorzugsweise einen weichelastischen Polyurethanschaum, der bevorzugt aus einem Polyisocyanat, einem Polyol und Wasser, oder einem Isocyanatprepolymer hergestellt werden kann. Vorzugsweise kann man die Bildung des Polyurethanschaums durch die Verwendung eines Treibmittels auf der Grundlage eines verflüssigten Gases begünstigen.

Als vulkanisierte Kautschukmassen können erfindungsgemäß als bevorzugte Materialien vulkanisierbare Gummicompounds eingesetzt werden, das heißt Mischungen aus niedermolekularem Synthesekautschuk mit vernetzbaren Doppelbindungen, wobei die Vulkanisation meist mit Schwefel (oder Schwefelverbindungen) bei Temperaturen von 150°C bis 180°C erfolgt. Den Mischungen können Treibmittel (beispielsweise Backpulver etc.) zugesetzt werden, so daß gummielastische Schäume erhalten werden. Beispiele für Dispersionsacrylate sind Polymerdispersionen von Polyacrylaten, meist Copolymere von Acrylsäureestern, wie Ethyl- und Butylacrylat. Diese Polymerdispersionen enthalten zwischen 30 und 60 % des Polymeren. Die Erhärtung erfolgt durch Austrocknen.

Die erfindungsgemäße Brandschutzplatte enthält vorzugsweise 30 bis 80 Gew.-%, bevorzugter 65 bis 75 Gew.-% des weichelastischen Bindemittels und entsprechend 70 bis 20 Gew.-%, bevorzugter 35 bis 25 Gew.-% des grobkörnigen anorganischen Füllstoffs.

Der grobkörnige anorganische Füllstoff umfaßt vorzugsweise Körner mit einer Teilchengröße von 1 bis 25 mm, vorzugsweise 3 bis 15 mm. Besonders bevorzugt als grobkörniger anorganischer Füllstoff sind Körner aus einem geschäumten mineralischen Material, beispielsweise Körner aus Bimsstein, Gasbeton, Wasserglasschaum, Geopolymeren, Sepiolith, Flugasche, Gips, geschäumtem Blähton, Perlite und/oder Vermiculit, oder aber auch Hohlkügelchen aus silikatischem Material oder Glas. Bei den als anorganischen Füllstoff eingesetzten Geopolymeren handelt es sich um synthetisch hergestellte Silikatschäume, beispielsweise aus Wasserglas mit Flugasche oder Korund und Peroxiden oder Metallpulver als Treibmittel. Diese Schäume sind nicht brennbar und besitzen gute Isolationseigenschaften. Abfälle aus der Herstellung können erfindungsgemäß auch als anorganischer Füllstoff eingesetzt werden.

In Abhängigkeit von den angestrebten Festigkeitseigenschaften der Brandschutzplatte ist es möglich, den grobkörnigen anorganischen Füllstoff in Form von Mischungen von Körnern unterschiedlicher Teilchengröße einzusetzen und/oder in Form von Mischungen von Körnchen aus unterschiedlichen anorganischen Materialien anzuwenden.

Durch die Anwesenheit des grobkörnigen anorganischen Füllstoffs wird nicht nur eine hohe mechanische Festigkeit, Stabilität und Druckfestigkeit der Brandschutzplatte erreicht, sondern namentlich im Falle von Körnern aus geschäumtem mineralischem Material auch eine leichte und einfache Bearbeitbarkeit, beispielsweise durch Schneiden oder Sägen und darüber hinaus eine hohe Festigkeit im Brandfall.

Es hat sich gezeigt, daß wenn man dem weichelastischen organischen Bindemittel der erfindungsgemäßen Brandschutzplatte die angegebene Additivmischung in einer Menge von 10 bis 60 Gew.-%, vorzugsweise 25 bis 40 Gew.-%, bezogen auf das Gewicht des Bindemittels, zusetzt, eine deutliche Verbesserung der Formbeständigkeit der Brandschutzplatte im Brandfall erreicht werden kann. Durch den Zusatz dieser Additivmischung verwandelt sich das weichelastische organische Bindemittel im Brandfall ohne wesentliche Änderung der geometrischen Abmessungen der Brandschutzplatte in eine anorganische, harte, steinartige, feuerbeständige Masse um. In dieser Weise wird es ohne weiteres möglich, mit der erfindungsgemäßen Brandschutzplatte den oben angesprochenen Hose Stream Test erfolgreich zu bestehen.

Gemäß einer bevorzugten Ausführungsform umfaßt die in das weichelastische organische Bindemittel eingearbeitete Additivmischung 10 bis 90 Gew.-%, vorzugsweise 40 bis 70 Gew.-% des Säurebildners, 5 bis 45 Gew.-%, vorzugsweise 15 bis 30 Gew.-% der Kohlenstoff liefernden Verbindung und 2 bis 30 Gew.-%, vorzugsweise 5 bis 15 Gew.-% des teilchenförmigen Metalls.

Als Säurebildner sind Salze oder Ester anorganischer, nichtflüchtiger Säuren, ausgewählt aus Schwefelsäure, Phosphorsäure und Borsäure, bevorzugt. Gemäß einer besonders bevorzugten Ausführungsform enthält die Additivmischung als Säurebildner Ammoniumphosphat, Ammoniumpolyphosphat, ein Diaminphosphat, einen Phosphorsäureester mit einwertigen oder mehrwertigen Alkoholen, insbesondere Polyolen, wie Pentaerythrit, namentlich Pentaerythritphosphat, Trichlorethylphosphat, Tris(2-chlorisopropyl)-phosphat, Triphenylphosphat, Tris(2-chlorethyl)-phosphat, ein einen Phosphorsäure-Teilester oder -Mischester mit einwertigen und/oder mehrwertigen niedrigmolekularen Alkoholen, ein Melaminphosphat, insbesondere Monomelaminorthophosphat, Dimelaminorthophosphat, Dimelaminpyrophosphat, Melaminpolyphosphat und/oder ein Borsäuresalz, insbesondere Melaminborat.

Die Additivmischung enthält vorzugsweise als kohlenstoffliefernde Verbindung eine Polyhydroxyverbindung und/oder ein thermoplastisches oder duroplastisches polymeres Harzbindemittel, wie insbesondere ein Kohlenhydrat, wie Zucker oder Stärke, Pentaerythrit, Dipentaerythrit, ein Phenolharz, ein Harnstoffharz, ein Polyurethan, Polyvinylchlorid, Poly(meth)acrylat, Polyvinylacetat, Polyvinylalkohol, ein Siliconharz und/oder einen Kautschuk.

Als teilchenförmiges Metall ist in der erfindungsgemäß eingesetzten Additivmischung vorzugsweise ein Metall ausgewählt aus der Aluminium, Magnesium, Eisen und Zink umfassenden Gruppe enthalten. Dabei kann das teilchenförmige Metall in Form eines Pulvers, von Plättchen, Schuppen, Fasern, Fäden und/oder Whiskers vorliegen. Das teilchenförmige Metall in Form von Pulver, Plättchen oder Schuppen besitzt vorzugsweise eine Teilchengröße von ≤ 50 µm, vorzugsweise von 0,5 bis 10 µm, während die Fasern, Fäden und/oder Whiskers des teilchenförmigen Metalls eine Dicke von 0,5 bis 10 µm und eine Länge von 10 bis 50 µm aufweisen.

Eine besonders bevorzugte Additivmischung umfaßt ein Gemisch aus 30 Gewichtsteilen Ammoniumpolyphosphat, 10 Gewichtsteilen Dipentaerythrit und 10 Gewichtsteilen Aluminiumpulver mit einer Teilchengröße von 5 µm. Durch die Zugabe dieser Additivmischung in einer Menge von 25 bis 40 Gew.-% zu dem weichelastischen organischen Bindemittel läßt sich eine besonders deutliche Steigerung der mechanischen Festigkeit der Brandschutzplatte im Brandfall erreichen.

Es ist erfindungsgemäß weiterhin möglich, dem weichelastischen organischen Bindemittel zusätzlich zu dem grobkörnigen anorganischen Füllstoff mindestens einen anorganischen Füllstoff, ausgewählt aus Metalloxiden, insbesondere Eisenoxid, Titandioxid, Siliciumdioxid und Aluminiumoxid, Schwerspat, Boraten, insbesondere Zinkborat, Carbonaten, vorzugsweise Kreide, Silikaten, vorzugsweise Alkalisilikaten, Talkum, Glimmer, Wollastonit, Kaolin und/oder Glaspulver zuzusetzen.

Darüber hinaus kann die Brandschutzwirkung der erfindungsgemäßen Brandschutzplatte dadurch gesteigert werden, daß gemäß einer bevorzugten Ausführungform zusätzlich ein oder mehrere Flammschutzmittel in das weichelastische organische Bindemittel eingearbeitet werden, beispielsweise halogenhaltige Flammschutzmittel, Ammoniumphosphate, Metallhydroxide, insbesondere Aluminiumhydroxide oder Magnesiumhydroxide, Metalloxide, insbesondere Antimonoxid, roter Phosphor und/oder Phosphorverbindungen, insbesondere halogenierte Phosphorsäureester, wie Trichlorethylphosphat, Tris(2-chlorisopropyl)-phosphat, Triphenylphosphat und/oder Tris(2-chlorethyl)-phosphat.

Im Brandfall zersetzt sich das weichelastische organische Bindemittel unter Einwirkung der hohen Temperaturen des Feuers und bildet zusammen mit den Additiven eine anorganische, keramikartige Matrix, in die der grobkörnige anorganische Füllstoff eingebunden bleibt, und die überraschend hohe mechanische Festigkeit besitzt.

Zur Herstellung des weichelastischen Polyurethanschaums kann man vorzugsweise Polyesterpolyole und OH-terminierte Polybutadiene, Polymere, Polyisocyanate (MDI oder TDI), Katalysatoren sowie Weichmacher (Polybutene, Phthalate, Sulfonate, Phosphorsäureester) einsetzen, sämtlich Materialien, die dem Fachmann für die Herstellung von weichelastischen Polyurethanschäumen geläufig sind.

Die Herstellung der erfindungsgemäßen Brandschutzplatte erfolgt in der Weise, daß man das weichelastische organische Bindemittel oder dessen Ausgangsprodukte, welches gegebenenfalls die oben angegebenen Zusätze und Hilfsstoffe enthält, mit dem grobkörnigen anorganischen Füllstoff vermischt, die Mischung in eine Form mit den gewünschten Abmessungen einbringt und verfestigt, beispielsweise durch Abkühlung oder Aushärtung. Besonders bevorzugte Herstellungsverfahren sind das RIM-Verfahren (Reaction Injection Moulding), bei dem die Reaktionskomponenten für die Herstellung eines Polyurethanschaums zusammen mit dem grobkörnigen anorganischen Füllstoff und gegebenenfalls der Additivmischung, weiterer Füllstoffe, Flammschutzmittel etc. in Form einer homogenen Mischung in eine Form eingespritzt und dort derart zur Reaktion gebracht werden, daß das gebildete Schaumprodukt die Form am Ende der Reaktion vollständig ausfüllt. Ein weiter bevorzugtes Verfahren besteht darin, ein aus einer Polyolkomponente und einem Polyisocyanat gebildetes Isocyanatprepolymer zusammen mit dem grobkörnigen anorganischen Füllstoff und gegebenenfalls der oben angesprochenen Zusätze in die Form einzubringen und dort unter Erhitzen mit Wasserdampf auszuhärten.

Die für die Erzeugung weichelastischer Polyurethanschäume erforderlichen Ausgangsmaterialien, wie Polyole, Polyisocyanate, Katalysatoren, Weichmacher etc. sowie die anzuwendenden Bedingungen sind dem Fachmann bekannt. Beispiele für die hierzu zu verwendenden Katalysatoren, insbesondere für jene, die die Isocyanatreaktion beschleunigen (PIR), sind Amine und metallorganische Verbindungen, wie Dibutylzinndilaurat (DBTL), Calziumoctoat oder Bleioctoat. Beispiele für Weichmacher sind hochsiedende, niedermolekulare Polybutadiene, Phthalate (beispielsweise Diisononylphthalat (DINP), Dioctylphthalat (DOP)), Sulfonate (beispielsweise Mesamoll von der Firma Bayer AG) und Phosphorsäureester, wie Tris(chlorisopropyl)phosphat (TCPP) und Trichlorethylphosphat (TEP).

Die für die Herstellung der erfindungsgemäßen Brandschutzplatte eingesetzten Formen werden in Abhängigkeit von den angestrebten Dimensionen entsprechend ausgelegt. Allerdings ist es möglich, namentlich bei Verwendung eines weichelastischen Polyurethanschaums als organischem Bindemittel und eines grobkörnigen anorganischen Füllstoff in Form von Körner aus einem geschäumten mineralischen Material ohne weiteres möglich, mit Hilfe des oben angesprochenen RIM-Verfahrens einen großen Block herzustellen, der anschließend in üblicher Weise durch Sägen in Brandschutzplatten der gewünschten Abmessungen zerlegt wird.

Gegenstand der Erfindung ist weiterhin die Verwendung der oben definierten Brandschutzplatte zum Brandschutz von Mauer-, Boden- oder Deckendurchbrüchen, inbesondere von Rohr- und Kabeldurchführungen. Die Erfindung sei im folgenden näher anhand der beigefügten Zeichnungen und der Beispiele erläutert.

In den Zeichnungen zeigen:
**Figur 1** eine erste Ausführungsform der Anwendung der erfindungsgemäßen Brandschutzplatte durch Einbau in die Bauteilöffnung, und
**Figur 2** eine zweite Ausführungsform der Anwendung durch Anordnung der erfindungsgemäßen Brandschutzplatte über der Bauteilöffnung.

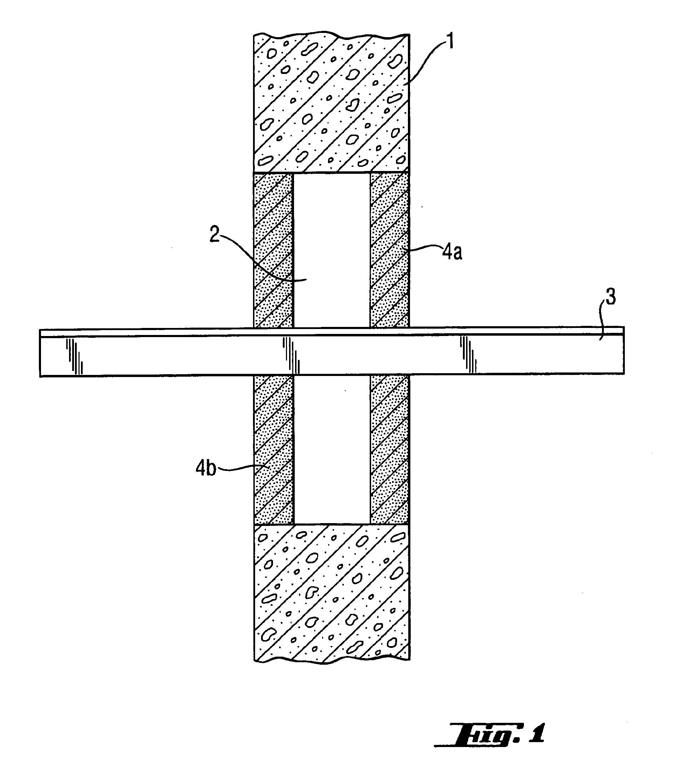

Wie mit der in der Figur 1 dargestellten Ausführungsform gezeigt ist, ist in einer Mauer (1) ein Durchbruch (2) vorgesehen, durch den eine Kabeltrasse (3) hindurchgeführt ist. Zur Abdichtung sind zwischen der mauerseitigen Begrenzung des Durchbruches und der Außenseite der hindurchgeführten Kabeltrasse zwei an die Konturen des Mauerdurchbruches und der Kabeltrasse angepaßte erfindungsgemäße Brandschutzplatten (4a) und (4b) vorgesehen und zwar derart, daß sie bündig in die Bauteilöffnung eingebaut sind.

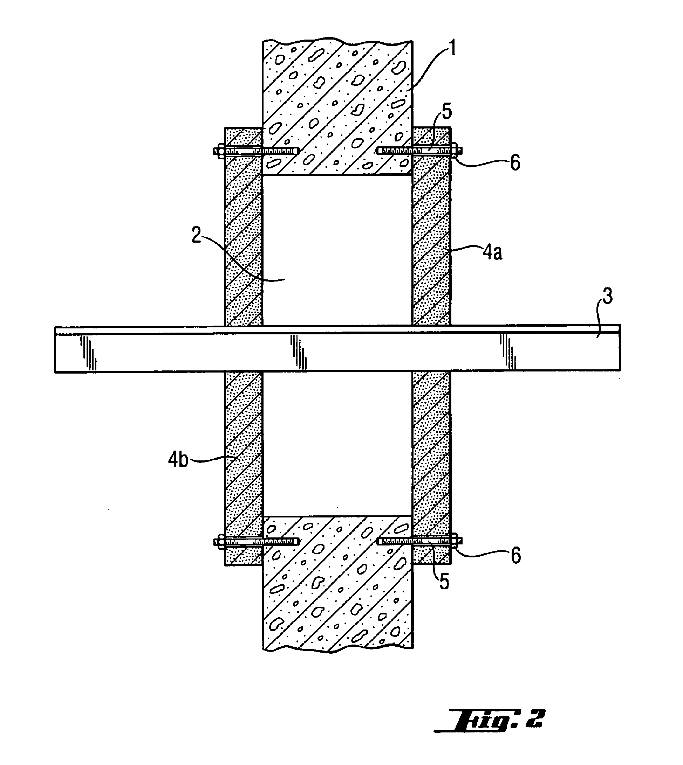

Bei der in der Figur 2 dargestellten Ausführungsform sind die erfindungsgemäßen Brandschutzplatten (4a) und (4b) nicht bündig in den Mauerdurchbruch eingeführt, sondern über die Bauteilöffnung montiert und mit Hilfe der Bolzen (5) und der Muttern (6) an der Mauer befestigt. Spalten, Risse, Stöße und Zwickel sind mit feuerbeständigen Dichtmitteln zu verschließen.

Es ist ersichtlich, daß beliebige andere Ausführungsformen zur Abdichtung der jeweiligen Durchbrüche und Durchführungen angewandt werden können in Abhängigkeit von den geometrischen Abmessungen des Durchbruchs einerseits und des hindurchgeführten Bauteils andererseits. Diese Platten können auch zur Kapselung von Kabeltrassen und -kanälen, sowie zur Bekleidung von Stahlträgern und -stützen eingesetzt werden.

Die folgenden Beispiele dienen der weiteren Erläuterung der Erfindung.

### BEISPIEL 1

Das vorliegende Beispiel verdeutlicht die Herstellung der erfindungsgemäßen Brandschutzplatte nach dem RIM-Verfahren (Reaction Injection Moulding).

Man vermischt zur Herstellung der Platte
- 1000 g: der nachfolgend angegebenen Polyolmischung (die 25 % der nachfolgend angegebenen Additivmi- schung enthält)
- 300 g: Polyisocyanat (z.B. Desmodur VL) und
- 500 g: Perlite mit einer Teilchengröße von 2 bis 7 mm als grobkörnigem anorgischem Füllstoff
füllt die Masse in eine Form ein und härtet aus unter Bildung einer Brandschutzplatte mit den in Abhängigkeit von der eingesetzten Form erreichten Abmessungen.

Die eingesetzte Additivmischung besteht aus:
- 71 %: Ammoniumpolyphosphat (Exolit AP 422)
- 11 %: Dipentaerythrit
- 8 %: Zinkborat
- 10 %: Aluminiumpulver (STAPA* PA Reflexal X/80)

Die eingesetzte Polyolmischung besteht aus:
40 Teilen eines difunktionellen Polyesterpolyols OH Zahl ca. 28 (Voranol EP 1900, DOW)
30 Teilen eines trifunktionellen Polyesterpolyols OH Zahl ca. 28 (Voranol CP 6055, DOW)
15 Teilen eines OH-terminierten Polybutadiens OH Zahl ca. 47 (Poly bd, Elf Atochem)
10 Teilen Tris(chlorisopropyl)phosphat
3 Teilen Isopropanol
2 Teilen Wasser
0,01 Teilen Katalysator (DBTL)
0,02 Teilen Aminkatalysator (Triethylendiamin DABCO LV 33, Air Products)

### BEISPIEL 2

Zur Herstellung einer Brandschutzplatte nach dem Prepolymerverfahren vermischt man
- 1200 g: eines Isocyanatprepolymers (beispielsweise Desmo dur E14) vermischt mit 30 % der oben definierten Additivmischung
- mit 500 g: Perlite mit einer Teilchengröße von 2 bis 7 mm als grobkörnigem anorganischem Füllstoff
bringt das Material in eine Form ein und härtet unter Anwendung von Heißdampf aus.

Die nach den obigen Beispielen hergestellten Brandschutzplatten besitzen eine hohe mechanische Festigkeit, namentlich Druckfestigkeit, Stoßfestigkeit und Eigenstabilität, lassen sich aber sehr leicht durch Sägen, Schneiden, Bohren und dergleichen bearbeiten, da das Bindemittel den gröbkörnigen anorganischen, vorzugsweisen geschäumten Füllstoff umhüllt und stabilisiert und gleichzeitig den Widerstand gegen das Schneiden und Sägen verringert.

### BEISPIEL 3

Dieses Beispiel verdeutlicht das Verhalten der nach dem Beispiel 1 hergestellten Brandschutzplatte im Brandfall.

Wenn man die Brandschutzplatte mit einer Dicke von 2,5 cm der Einwirkung einer Flamme aussetzt, so wandelt sich das organische Bindemittel nach 30 Minuten bei 1000°C vollständig um in eine anorganische, keramikartige Matrix um, in welche die Perlitekörnchen eingebettet sind und erfährt während der folgenden 2 Stunden bei 1200°C keine weitere Veränderung. Der für eine Zulassung für 2 Stunden Feuerwiderstandsdauer in den USA nach ASTM 814 notwendige Wasserstrahltest wird bei einem Öffnungsquerschnitt von 30 x 30 cm ohne Probleme bestanden.

## Patentansprüche

1. Flexible Brandschutzplatte mit einer Kunststoffmatrix und anorganischem Füllstoff, mit einer Platte aus einem weichelastischen organischen Bindemittel, in welches ein grobkörniger anorganischer Füllstoff eingebettet ist, **dadurch gekennzeichnet, daß** das weichelastische organische Bindemittel 10 bis 60 Gew.-% eines Additivs zur Erhöhung der Formbeständigkeit der im Brandfall gebildeten Kruste enthält, wobei das Additiv eine Additivmischung mit einem Gehalt an mindestens einem Säurebildner, mindestes einer Kohlenstoff liefernden Verbindung und mindestens einem teilchenförmigen Metall umfaßt.

2. Brandschutzplatte nach Anspruch 1, **dadurch gekennzeichnet, daß** sie als weichelastisches Bindemittel einen weichelastisches Polyurethanpoylmer, eine vulkanisierte Kautschukmasse, ein Dispersionsacrylat und/oder Polyvinylacetat umfaßt.

3. Brandschutzplatte nach Anspruch 2, **dadurch gekennzeichnet, daß** das weichelastische Polyurethanpolymer ein Polyurethanschaum aus einem Polyisocyanat, einem Polyol und Wasser oder einem Treibmittel auf der Grundlage eines verflüssigten Gases gebildeter Polyurethanschaum ist.

4. Brandschutzplatte nach den Ansprüchen 1 bis 3, **dadurch gekennzeichnet, daß** sie 30 bis 80 Gew.-%, vorzugsweise 65 bis 75 Gew.-% des weichelastischen Bindemittels und 70 bis 20 Gew.-%, vorzugsweise 35 bis 25 Gew.-% des grobkörnigen anorganischen Füllstoffs umfaßt.

5. Brandschutzplatte nach den Ansprüchen 1 bis 4, **dadurch gekennzeichnet, daß** sie als grobkörnigen anorganischen Füllstoff Körner mit einer Teilchengröße von 1 bis 25 mm, vorzugsweise 3 bis 15 mm umfaßt.

6. Brandschutzplatte nach Anspruch 5, **dadurch gekennzeichnet, daß** sie als grobkörnigen anorganischen Füllstoff Körner aus einem geschäumten mineralischen Material umfaßt.

7. Brandschutzplatte nach den Ansprüchen 1 bis 6, **dadurch gekennzeichnet, daß** sie als grobkörnigen anorganischen Füllstoff Körner aus Bimsstein, Gasbeton, Wasserglasschaum, Geopolymeren, Sepiolith, Flugasche, Gips, geschäumtem Blähton, Perlite und/oder Vermiculit, oder in Form von Hohlkügelchen aus silikatischem Material oder Glas umfaßt.

8. Brandschutzplatte nach den Ansprüchen 1 bis 7, **dadurch gekennzeichnet, daß** das weichelastische organische Bindemittel 25 bis 40 Gew.-% der Additivmischung enthält.

9. Brandschutzplatte nach Anspruch 8, **dadurch gekennzeichnet, daß** die Additivmischung 10 bis 90 Gew.-%, vorzugsweise 40 bis 70 Gew.-% des Säurebildners, 5 bis 45 Gew.-%, vorzugsweise 15 bis 30 Gew.-% der Kohlenstoff liefernden Verbindung und 2 bis 30 Gew.-%, vorzugsweise 5 bis 15 Gew.-% des teilchenförmigen Metalls enthält.

10. Brandschutzplatte nach Anspruch 9, **dadurch gekennzeichnet, daß** die Additivmischung als Säurebildner ein Salz oder einen Ester einer anorganischen, nichtflüchtigen Säure ausgewählt aus Schwefelsäure, Phosphorsäure und Borsäure enthält.

11. Brandschutzplatte nach Anspruch 10, **dadurch gekennzeichnet, daß** die Additivmischung als Säurebildner Ammoniumphosphat, Ammoniumpolyphosphat, ein Diaminphosphat, einen Phosphorsäureester mit einwertigen oder mehrwertigen Alkoholen, insbesondere Polyolen, wie Pentaerythrit, namentlich Pentaerythritphosphat, Trichlorethylphosphat, Tris(2-chlorisopropyl)-phosphat, Triphenylphosphat, Tris(2-chlorethyl)-phosphat, ein einen Phosphorsäure-Teilester oder -Mischester mit einwertigen und/oder mehrwertigen niedrigmolekularen Alkoholen, ein Melaminphosphat, insbesondere Monomelaminorthophosphat, Dimelaminorthophosphat, Dimelaminpyrophosphat, Melaminpolyphosphat und/ oder ein Borsäuresalz, insbesondere Melaminborat, enthält.

12. Brandschutzplatte nach mindestens einem der Ansprüche 1 bis 11, **dadurch gekennzeichnet, daß** die Additivmischung als Kohlenstoff liefernde Verbindung eine Polyhydroxyverbindung und/oder ein thermoplastisches oder duroplastisches polymeres Harzbindemittel enthält.

13. Brandschutzplatte nach Anspruch 12, **dadurch gekennzeichnet, daß** die Additivmischung als Kohlenstoff liefernde Verbindung ein Kohlenhydrat, wie Zucker oder Stärke, Pentaerythrit, Dipentaerythrit, ein Phenolharz, ein Harnstoffharz, ein Polyurethan, Polyvinylchlorid, Poly(meth)acrylat, Polyvinylacetat, Polyvinylalkohol, ein Siliconharz und/ oder einen Kautschuk enthält.

14. Brandschutzplatte nach mindestens einem der Ansprüche 1 bis 13, **dadurch gekennzeichnet, daß** sie als teilchenförmiges Metall ein Metall ausgewählt aus der Aluminium, Magnesium, Eisen und Zink umfassenden Gruppe enthält.

15. Brandschutzplatte nach Anspruch 14, **dadurch gekennzeichnet, daß** die Additivmischung das teilchenförmige Metall in Form eines Pulvers, von Plättchen, Schuppen, Fasern, Fäden und/oder Whiskers enthält.

16. Brandschutzplatte nach Anspruch 15, **dadurch gekennzeichnet, daß** das teilchenförmige Metall in Form von Pulver, Plättchen oder Schuppen eine Teilchengröße von ≤ 50 µm, vorzugsweise von 0,5 bis 10 µm aufweist.

17. Brandschutzplatte nach Anspruch 16, **dadurch gekennzeichnet, daß** die Fasern, Fäden und/oder Whiskers des teilchenförmige Metalls eine Dicke von 0,5 bis 10 µm und eine Länge von 10 bis 50 µm aufweisen.

18. Brandschutzplatte nach mindestens einem der vorhergehenden Ansprüche, **dadurch gekennzeichnet, daß** das weichelastische organische Bindemittel zusätzlich mindestens einen anorganischen Füllstoff ausgewählt aus Metalloxiden, insbesondere Eisenoxid, Titandioxid, Siliciumdioxid und Aluminiumoxid, Schwerspat, Boraten, insbesondere Zinkborat, Carbonaten, vorzugsweise Kreide, Silikaten, vorzugsweise Alkalisilikaten, Talkum, Glimmer, Wollastonit, Kaolin und/oder Glaspulver enthält.

19. Brandschutzplatte nach mindestens einem der vorhergehenden Ansprüche, **dadurch gekennzeichnet, daß** die das weichelastische organische Bindemittel zusätzlich ein oder mehrere Flammschutzmittel enthält.

20. Brandschutzplatte nach Anspruch 19, **dadurch gekennzeichnet, daß** das weichelastische organische Bindemittel zusätzlich als zusätzliches Flammschutzmittel ein halogenhaltiges Flammschutzmittel, Ammoniumphosphat, ein Metallhydroxid, insbesondere Aluminiumhydroxid oder Magnesiumhydroxid, ein Metalloxid, insbesondere Antimonoxid, roten Phosphor und/oder eine Phosphorverbindung, insbesondere einen halogenierten Phosphorsäureester, wie Trichlorethylphosphat, Tris(2-chlorisopropyl)-phosphat, Triphenylphosphat und/oder Tris(2-chlorethyl)-phosphat, enthält.

21. Verwendung der Brandschutzplatte nach mindestens einem der vorhergehenden Ansprüche zum Brandschutz von Mauer-, Boden- oder Deckendurchbrüchen, insbesondere von Rohr- und Kabeldurchführungen.

## Claims

1. Flexible fireproof panel with a plastic matrix and inorganic filler, with a panel made of a pliable organic binder, in which a coarse-grained inorganic filler is embedded, **characterised in that** the pliable organic binder contains 10 to 60% by weight of an additive to increase the dimensional stability of the crust formed in a fire, in which the additive comprises an additive mixture with a content of at least one acidifier, at least one compound supplying carbon and at least one particulate metal.

2. Fireproof panel according to claim 1, **characterised in that** it contains a pliable polyurethane polymer, a vulcanized rubber material, an acrylic dispersion and/or polyvinyl acetate as the pliable binder.

3. Fireproof panel according to claim 2, **characterised in that** the pliable polyurethane polymer is a polyurethane foam from a polyisocyanate, a polyol and water or a propellant based on a polyurethane foam formed from a liquefied gas.

4. Fireproof panel according to claims 1 to 3, **characterised in that** it contains 30 to 80% by weight, preferably 65 to 75% by weight, of the pliable binder and 70 to 20% by weight, preferably 35 to 25% by weight, of the coarse-grained inorganic filler.

5. Fireproof panel according to claims 1 to 4, **characterised in that** it contains grains with a particle size of 1 to 25 mm, preferably 3 to 15 mm, as the coarse-grained inorganic filler.

6. Fireproof panel according to claim 5, **characterised in that** it contains grains of a foamed mineral material as the coarse-grained inorganic filler.

7. Fireproof panel according to claims 1 to 6, **characterised in that** it contains grains of pumice, foamed concrete, water glass foam, geopolymers, sepiolite, fly-ash, gypsum, foamed expanded clay, perlite and/or vermiculite, or in the form of hollow beads of silicate material or glass as the coarse-grained inorganic filler.

8. Fireproof panel according to claims 1 to 7, **characterised in that** the pliable organic binder contains 25 to 40% by weight of the additive mixture.

9. Fireproof panel according to claim 6, **characterised in that** the additive mixture contains 10 to 90% by weight, preferably 40 to 70% by weight, of the acidifier, 5 to 45% by weight, preferably 15 to 30% by weight, of the compound supplying carbon and 2 to 30% by weight, preferably 5 to 15% by weight, of the particulate metal.

10. Fireproof panel according to claim 9, **characterised in that** the additive mixture contains a salt or ester of an inorganic, non-volatile acid selected from sulphuric acid, phosphoric acid or boric acid as the acidifier.

11. Fireproof panel according to claim 10, **characterised in that** the additive mixture contains ammonium phosphate, ammonium polyphosphate, a diamine phosphate, a phosphoric acid ester with monohydric or polyhydric alcohols, particularly polyols such as pentaerythrite, specifically pentaerythrite phosphate, trichloroethyl phosphate, tri (2-chloroisopropyl) phosphate. triphenyl phosphate, tri (2-chloroethyl) phosphate, a phosphoric acid partial ester or mixed ester with monohydric and/or polyhydric, low-molecular alcohols, a melamine phosphate, particularly monomelamine orthophosphate, dimelamine orthophosphate, dimelamine pyrophosphate, melamine polyphosphate and/or a boric acid salt, particularly melamine borate, as the acidifier.

12. Fireproof panel according to at least one of claims 1 to 11, **characterised in that** the additive mixture contains a polyhydroxy compound and/or a thermoplastic or thermosetting polymer resin binder as the compound supplying carbon.

13. Fireproof panel according to claim 12, **characterised in that** the additive mixture contains a carbohydrate such as sugar or starch, pentaerythrite, dipentaerythrite, a phenolic resin, a urea resin, a polyurethane, polyvinyl chloride, poly(meth)acrylate, polyvinyl acetate, polyvinyl alcohol, a silicone resin and/or a rubber as the compound supplying carbon.

14. Fireproof panel according to at least one of claims 1 to 13, **characterised in that** it contains a metal selected from aluminium, magnesium, iron and zinc as the particulate metal.

15. Fireproof panel according to claim 14, **characterised in that** the additive mixture contains the particulate metal in the form of a powder, chips, flakes, fibres, threads and/or whiskers.

16. Fireproof panel according to claim 15, **characterised in that** the particulate metal in the form of powder, chips or flakes has a particle size of ≤ 50 µm, preferably 0.5 to 10 µm.

17. Fireproof panel according to claim 16, **characterised in that** the fibres, threads and/or whiskers of the particulate metal have a thickness of 0.5 to 10 µm and a length of 10 to 50 µm.

18. Fireproof panel according to at least one of the preceding claims, **characterised in that** the pliable organic binder additionally contains at least one inorganic filler selected from metal oxides, particularly iron oxide, titanium dioxide, silicon dioxide and aluminium oxide, barytes, borates, particularly zinc borate, carbonates, preferably chalk, silicates, preferably alkali silicates, talcum, mica, wollastonite, kaolin and/or glass powder.

19. Fireproof panel according to at least one of the preceding claims, **characterised in that** the pliable organic binder additionally contains one or more flame retardants.

20. Fireproof panel according to claim 19, **characterised in that** the pliable organic binder additionally contains a flame retardant containing halogens, ammonium phosphate, a metal hydroxide, particularly aluminium hydroxide or magnesium hydroxide, a metal oxide, particularly antimony oxide, red phosphorus and/or a phosphorus compound, particularly a halogenated phosphoric acid ester such as trichloroethyl phosphate, tri (2-chloroisopropyl) phosphate, triphenyl phosphate and/or tri (2-chloroethyl) phosphate as an additional flame retardant.

21. Use of the fireproof panel according to at least one of the preceding claims for fireproofing wall, floor or ceiling openings, particularly pipe and cable penetrations.

## Revendications

1. Panneau anti-feu flexible, comportant une matrice en matière plastique et un matériau de remplissage inorganique, comportant un panneau en liant organique élastique souple, dans lequel est enrobé un matériau de remplissage inorganique à gros grains, **caractérisé en ce que** le liant organique élastique souple contient 10 à 60 % en poids d'un additif destiné à augmenter la stabilité de forme de la croûte formée en cas d'incendie, l'additif comprenant un mélange d'additifs qui contient au moins un acidificateur, au moins un composé délivrant du carbone et au moins un métal sous forme de particules.

2. Panneau anti-feu selon la revendication 1, **caractérisé en ce** le liant élastique souple contenu dans ledit panneau comporte un polymère polyuréthane élastique souple, une masse de caoutchouc vulcanisée, un acrylate à dispersion et/ou un polyacétate de vinyle.

3. Panneau anti-feu selon la revendication 2, **caractérisé en ce que** le polymère polyuréthane élastique souple est une mousse de polyuréthane constituée d'un polyisocyanate, d'un polyol et d'eau ou d'un produit moussant à base d'un gaz liquéfié.

4. Panneau anti-feu selon l'une quelconque des revendications 1 à 3, **caractérisé en ce qu'**il contient 30 à 80 % en poids, de préférence 65 à 75 % en poids du liant élastique souple, et 70 à 20 % poids, de préférence 35 à 25 % en poids du matériau de remplissage inorganique à gros grains.

5. Panneau anti-feu selon l'une quelconque des revendications 1 à 4, **caractérisé en ce que** le matériau de remplissage inorganique à gros grains contenu dans ledit panneau contient des grains avec une granulométrie de 1 à 25 mm, de préférence de 3 à 15 mm.

6. Panneau anti-feu selon la revendication 5, **caractérisé en ce que** le matériau de remplissage inorganique à gros grains contenu dans ledit panneau contient des grains constitués d'un matériau minéral expansé.

7. Panneau anti-feu selon l'une quelconque des revendications 1 à 6, **caractérisé en ce que** le matériau de remplissage inorganique à gros grains contenu dans ledit panneau contient des grains constitués de pierre ponce, de béton expansé, de mousse de silicate de soude, de géopolymères, de sépiolite, de cendre volante, de plâtre, d'argile expansée, de perlite et/ou de vermiculite, ou sous forme de billes creuses en matériau à base de silicate ou en verre.

8. Panneau anti-feu selon l'une quelconque des revendications 1 à 7, **caractérisé en ce que** le liant organique élastique souple contient 25 à 40 % en poids du mélange d'additifs.

9. Panneau anti-feu selon la revendication 8, **caractérisé en ce que** le mélange d'additifs contient 10 à 90 % en poids, de préférence 40 à 70 % en poids de l'acidificateur, 5 à 45 % en poids, de préférence 15 à 30 % en poids du composé délivrant du carbone, et 2 à 30 % en poids, de préférence 5 à 15 % en poids du métal sous forme de particules.

10. Panneau anti-feu selon la revendication 9, **caractérisé en ce que** le mélange d'additifs contient comme acidificateur un sel ou un ester d'un acide inorganique non volatil, choisi parmi l'acide sulfurique, l'acide phosphorique et l'acide borique.

11. Panneau anti-feu selon la revendication 10, **caractérisé en ce que** le mélange d'additifs contient comme acidificateur le phosphate d'ammonium, le polyphosphate d'ammonium, un phosphate de diamine, un ester d'acide phosphorique avec des alcools monovalents ou plurivalents, en particulier des polyols, tels que du pentaérythrite, à savoir le phosphate de pentaérythrite, le phosphate de trichloréthyle, le tris(2-chlorisopropyl)phosphate, le phosphate de triphényle, le tris(2-chloréthyle)phosphate, un ester partiel ou un ester mixte d'acide phosphorique avec des alcools faiblement moléculaires monovalents et/ou plurivalents, un phosphate de mélamine, en particulier un orthophosphate de mélamine, en particulier un orthophosphate de monomélamine, un orthophosphate de dimélamine, un pyrophosphate de dimélamine, un polyphosphate de mélamine et/ou un sel d'acide borique, en particulier un borate de mélamine.

12. Panneau anti-feu selon au moins l'une des revendications 1 à 11, **caractérisé en ce que** le mélange d'additifs contient comme composé délivrant du carbone un composé polyhydroxy et/ou un liant de résine polymère thermoplastique ou thermodurcissable.

13. Panneau anti-feu selon la revendication 12, **caractérisé en ce que** le mélange d'additifs contient comme composé délivrant du carbone un hydrate de carbone, tel que le sucre ou l'amidon, un pentaérythrite, un dipentaérythrite, une résine phénolique, une résine d'urée, un polyuréthane, un chlorure de polyvinyle, un poly(méth)acrylate, un polyacétate de vinyle, un alcool de polyvinyle, une résine silicone et/ou un caoutchouc.

14. Panneau anti-feu selon au moins l'une des revendications 1 à 13, **caractérisé en ce que** le métal sous forme de particules contenu dans ledit panneau est un métal choisi dans le groupe contenant l'aluminium, le magnésium, le fer et le zinc.

15. Panneau anti-feu selon la revendication 14, **caractérisé en ce que** le mélange d'additifs contient le métal sous forme de particules sous forme de poudre, de plaquettes, de flocons, de fibres, de fils et/ou de barbes.

16. Panneau anti-feu selon la revendication 15, **caractérisé en ce que** le métal sous forme de particules contenu sous forme de poudre, de plaquettes ou de flocons possède une grosseur de grains de ≤ 50 µm, de préférence de 0,5 à 10 µm.

17. Panneau anti-feu selon la revendication 16, **caractérisé en ce que** les fibres, fils et/ou barbes du métal en forme de particules ont une épaisseur de 0,5 à 10 µm et une longueur de 10 à 50 µm.

18. Panneau anti-feu selon au moins l'une des revendications précédentes, **caractérisé en ce que** le liant organique élastique souple contient en plus au moins un matériau de remplissage inorganique choisi parmi les oxydes métalliques, en particulier l'oxyde de fer, le dioxyde de titane, le dioxyde de silicium et l'oxyde d'aluminium, de la baryte sulfatée, des borates, en particulier du borate de zinc, des carbonates, de préférence de la craie, des silicates, de préférence des silicates alcalins, du talc, du mica, de la wollastonite, du kaolin et/ou de la poudre de verre.

19. Panneau anti-feu selon au moins l'une des revendications précédentes, **caractérisé en ce que** le liant organique élastique souple contient en plus un ou plusieurs moyens de protection anti-flammes.

20. Panneau anti-feu selon la revendication 19, **caractérisé en ce que** le liant organique élastique souple contient en plus comme moyen de protection anti-flammes supplémentaire un moyen de protection anti-flammes contenant un halogène, un phosphate d'ammonium, un hydroxyde métallique, en particulier un hydroxyde d'aluminium ou un hydroxyde de magnésium, un oxyde métallique, en particulier un oxyde d'antimoine, du phosphore rouge et/ou un composé de phosphore, en particulier un ester d'acide phosphorique halogéné, tels que le phosphate de trichloréthyle, le tris(2-chlorisopropyl)phosphate, le phosphate de triphényle et/ou le tris(2-chloréthyl)phosphate.

21. Utilisation du panneau anti-feu selon au moins l'une des revendications précédentes pour la protection contre le feu des ouvertures dans les murs, les sols ou les plafonds, en particulier des passagers pour tubes et pour câbles.
